(19) Europäisches Patentamt
European Patent Office
Office européen des brevets

(11) **EP 2 321 713 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: **09781590.6**

(22) Anmeldetag: **06.08.2009**

(51) Int Cl.:
**G06F 3/00** (2006.01)

(86) Internationale Anmeldenummer:
**PCT/EP2009/060248**

(87) Internationale Veröffentlichungsnummer:
**WO 2010/015693 (11.02.2010 Gazette 2010/06)**

(54) **VERFAHREN ZUM ANZEIGEN VON INFORMATION INSBESONDERE IN EINEM FAHRZEUG UND BEDIENVORRICHTUNG INSBESONDERE FÜR EIN FAHRZEUG**

METHOD FOR DISPLAYING INFORMATION, IN PARTICULAR IN A VEHICLE, AND OPERATING DEVICE, IN PARTICULAR FOR A VEHICLE

PROCÉDÉ D AFFICHAGE D INFORMATIONS EN PARTICULIER DANS UN VÉHICULE ET DISPOSITIF D ACTIONNEMENT EN PARTICULIER POUR UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.08.2008 DE 102008037978**

(43) Veröffentlichungstag der Anmeldung:
**18.05.2011 Patentblatt 2011/20**

(73) Patentinhaber: **Volkswagen Aktiengesellschaft 38440 Wolfsburg (DE)**

(72) Erfinder: **MICHAELIS, Jan 10711 Berlin (DE)**

(74) Vertreter: **Reitstötter - Kinzebach Patentanwälte Sternwartstrasse 4 81679 München (DE)**

(56) Entgegenhaltungen:
**WO-A-01/52044        DE-A1- 10 022 450
JP-A- 2001 166 865**

**Beschreibung**

Die vorliegende Erfindung betrifft ein Verfahren zum Anzeigen von Information, bei dem von einer Anzeigevorrichtung Information angezeigt wird und die angezeigte Information dadurch verändert wird, dass ein Nutzer eine Eingabevorrichtung betätigt. Das Verfahren kann insbesondere in einem Fahrzeug eingesetzt werden, so dass die Information in dem Fahrzeug angezeigt wird. Ferner betrifft die Erfindung eine Bedienvorrichtung mit einer Anzeigevorrichtung zum Anzeigen von Information, einer Eingabevorrichtung und einer Steuervorrichtung, die mit der Anzeigevorrichtung und der Eingabevorrichtung so gekoppelt ist, dass durch eine Betätigung der Eingabevorrichtung die angezeigte Information veränderbar ist. Auch die Bedienvorrichtung ist insbesondere für ein Fahrzeug ausgebildet, wobei von der Anzeigevorrichtung die Information in dem Fahrzeug angezeigt wird.

In einem Fahrzeug werden herkömmlicherweise verschieden Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des sog. Kombiinstruments in der Nähe des primären Sichtfeld des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geografische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebenen Information unterstützt bzw. geführt. Ferner kann über das Bediensystem ausgewählt werden, welche Informationen auf der Multifunktionsanzeige angezeigt werden sollen. WO01/52044 A2 offenbart ein Verfahren und eine Bedienvorrichtung gemäß den Oberbegriffen der Ansprüche 1 und 9.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geografischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z.B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

Des Weiteren ist aus der EP 0 366 132 B1 eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, das Display selbst mit einer berührungsempfindlichen Oberfläche auszustatten und auf diese Weise einen sog. Touchscreen zur Verfügung zu stellen. Bei einem solchen Touchscreen erfolgt die Bedienung dadurch, dass der Nutzer z.B. mit seiner Fingerspitze den Touchscreen berührt. Die Position der Berührung wird erfasst, ausgewertet und einem Bedienschritt zugeordnet. Um den Nutzer bei der Bedienung zu unterstützen, können auf dem Display virtuelle Schalter als grafische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Schließlich ist zu berücksichtigen, dass während der Fahrt im Fahrzeug Vibrationen auftreten. Die Anzeige und die Bedienung sollten daher so ausgestaltet sein, dass sie nicht durch derartige Vibrationen beeinträchtigt werden.

Es ist die Aufgabe der vorliegenden Erfindung, ein Verfahren zum Anzeigen von Information und eine Bedienvorrichtung der eingangs genannten Art bereitzustellen, mit denen die angezeigte Information von einem Nutzer sehr schnell verändert werden kann, wobei die Betätigung der Eingabevorrichtung die Aufmerksamkeit des Nutzers so wenig wie möglich beansprucht. Das Verfahren und die Bedienvorrichtung sollen insbesondere so ausgebildet sein, dass sie in einem Fahrzeug eingesetzt werden können.

Erfindungsgemäß wird diese Aufgabe durch ein Verfahren mit den Merkmalen des Anspruchs 1 und eine Bedienvorrichtung mit den Merkmalen des Anspruchs 9 gelöst. Vorteilhafte Aus- und Weiterbildungen ergeben sich aus den abhängigen Ansprüchen.

Bei herkömmlichen Eingabevorrichtungen ist die Geschwindigkeit, mit der sich die angezeigte Information auf eine Eingabe eines Nutzers ändert, konstant. Ferner ist es möglich, dass der Nutzer die Geschwindigkeit erhöhen kann, indem er die Eingabevorrichtung für eine gewisse Zeit dauerhaft und ununterbrochen betätigt. Diese Art und Weise die Geschwindigkeit, mit der sich die angezeigte Information ändert, zu erhöhen, ist insbesondere bei einem Einsatz in einem Fahrzeug nachteilhaft, da sich die Bediendauer und damit die Ablenkungsgefahr für einen Fahrer, der die Eingabevorrichtung betätigt, erhöht. Zudem erschweren im Fahrzeug auftretende Erschütterungen und Vibrationen die ununterbrochene Betätigung einer Eingabevorrichtung, so dass die Gefahr besteht, dass der Eingabevorgang ungewollt unterbrochen wird.

Bei dem erfindungsgemäßen Verfahren kann der Nutzer die Geschwindigkeit, mit der sich die angezeigte Information ändert, über die Kraft steuern, mit welcher er die Eingabevorrichtung betätigt. Hierdurch kann die Betätigungsdauer erheblich verkürzt werden. Außerdem ist die Steuerung der Geschwindigkeit, mit der sich die angezeigte Information ändert, über die auf die Eingabevorrichtung ausgeübte Kraft für den Nutzer intuitiv verständlich, so dass der Bedienvorgang für den Nutzer sehr einfach durchgeführt werden kann.

Falls man des Weiteren die Fläche berücksichtigt, auf welche die Kraft vom Nutzer ausgeübt wird, kann auch der auf die Eingabevorrichtung ausgeübte Druck detektiert werden und die Geschwindigkeit, mit der sich die Anzeigeinformation ändert, hängt in diesem Fall von dem ausgeübten Druck ab. Im Folgenden wird daher nicht zwischen den Größen *Druck* und *Kraft* im Einzelnen unterschieden.

Gemäß einer Ausgestaltung des erfindungsgemäßen Verfahrens ist die Geschwindigkeit um so höher, desto größer die vom Nutzer bei der Betätigung ausgeübte Kraft ist. Der Nutzer kann somit die Geschwindigkeit erhöhen, indem er stärker auf die Eingabevorrichtung drückt.

Von der Anzeigevorrichtung kann beispielsweise ein die Information enthaltendes grafisches Objekt in einem Teilbereich einer Anzeigefläche dargestellt werden. Gemäß dem erfindungsgemäßen Verfahren wird die Position des Objekts innerhalb der Anzeigefläche durch die Betätigung der Eingabevorrichtung verschoben, wobei die Verschiebegeschwindigkeit von der vom Nutzer bei der Betätigung des Eingabegeräts ausgeübten Kraft abhängt.

Ferner kann beispielsweise von der Anzeigevorrichtung eine die Information enthaltende Liste angezeigt werden, wobei die Liste eine Vielzahl von Listeneinträgen umfasst und wobei nur eine Teilmenge dieser Vielzahl von Listeneinträgen angezeigt wird. Gemäß einer Ausgestaltung des erfindungsgemäßen Verfahrens werden in diesem Fall die angezeigten Listeneinträge der Liste durch die Betätigung der Eingabevorrichtung verändert, wobei die Geschwindigkeit der Veränderung von der vom Nutzer bei der Betätigung der Eingabevorrichtung ausgeübten Kraft abhängt. Der Nutzer kann beispielsweise durch die Betätigung der Eingabevorrichtung durch die Liste scrollen, wobei die Scrollgeschwindigkeit von der vom Nutzer bei der Betätigung des Eingabegeräts ausgeübten Kraft abhängt.

Des Weiteren kann von der Anzeigevorrichtung die Information eines Ausschnitts einer virtuellen Anzeigeebene angezeigt werden. Gemäß einer Ausgestaltung des erfindungsgemäßen Verfahrens wird in diesem Fall die Position des Ausschnitts innerhalb der virtuellen Anzeigeebene durch die Betätigung der Eingabevorrichtung verschoben, wobei die Verschiebegeschwindigkeit von der vom Nutzer bei der Betätigung der Eingabevorrichtung ausgeübten Kraft abhängt.

Schließlich kann von der Anzeigevorrichtung die Information in einem Darstellungsmaßstab dargestellt werden. Gemäß einer Ausgestaltung des erfindungsgemäßen Verfahrens wird in diesem Fall der Darstellungsmaßstab durch die Betätigung der Eingabevorrichtung verändert, wobei die Veränderungsgeschwindigkeit von der vom Nutzer bei der Betätigung der Eingabevorrichtung ausgeübten Kraft abhängt. Beispielsweise kann der Nutzer durch die Größe der auf die Eingabevorrichtung ausgeübten Kraft steuern, wie schnell er in eine geografische Karte eines Navigationssystems hinein- oder hinauszoomen will.

Gemäß einer Ausgestaltung des erfindungsgemäßen Verfahrens wird die bei der Betätigung der Eingabevorrichtung ausübbare Kraft in Bereiche unterteilt. Die Geschwindigkeit, mit der sich die angezeigte Information ändert, hängt in diesem Fall vom Bereich ab, in welchen die ausgeübte Kraft fällt. Die Geschwindigkeit wird in diesem Fall somit schrittweise bei Überschreiten bestimmter Schwellenwerte verändert.

Gemäß einer anderen Ausgestaltung hängt die Geschwindigkeit, mit der sich die angezeigte Information ändert, von der ausgeübten Kraft in folgender Weise ab:

$$ v = F \cdot D \quad , $$

wobei $v$ die Geschwindigkeit, $F$ die ausgeübte Kraft und $D$ ein Dämpfungsfaktor ist. Zwischen der ausgeübten Kraft und der Geschwindigkeit mit der sich die angezeigte Information ändert, besteht somit ein linearer Zusammenhang.

Die erfindungsgemäße Bedienvorrichtung ist dadurch gekennzeichnet, dass die Eingabevorrichtung drucksensitiv ist, so dass die bei der Betätigung auf das Eingabegerät ausgeübte Kraft (bzw. der ausgeübte Druck) detektierbar ist, und die Steuervorrichtung die Anzeigevorrichtung so steuert, dass die Geschwindigkeit, mit der sich die angezeigte Information ändert, von der ausgeübten Kraft (bzw. von dem ausgeübten Druck) abhängt.

Die Steuervorrichtung ist insbesondere so ausgebildet, dass sie die Schritte des vorstehend beschriebenen Verfahrens ausführen kann.

Die Eingabevorrichtung kann die Kraft beispielsweise resistiv oder kapazitiv detektieren.

Gemäß einer Ausgestaltung der erfindungsgemäßen Bedienvorrichtung umfasst die Eingabevorrichtung eine berührungsempfindliche Oberfläche, wobei die auf diese Oberfläche ausgeübte Kraft detektierbar ist. Des Weiteren kann die Kraft ortsaufgelöst detektiert werden, d.h. es kann detektiert werden, an welcher Stelle und gegebenenfalls auf welcher Fläche die Kraft auf die berührungsempfindliche Oberfläche ausgeübt wird. Bei der Eingabevorrichtung kann es sich somit um ein drucksensitives Touchpad handeln.

Gemäß einer weiteren Ausgestaltung der erfindungsgemäßen Bedienvorrichtung ist die Oberfläche auf einer Anzeigefläche der Anzeigevorrichtung angeordnet. In diesem Fall handelt es sich somit um einen drucksensitiven Touchscreen.

Gemäß einer Ausgestaltung des erfindungsgemäßen Verfahrens und der erfindungsgemäßen Bedienvorrichtung werden sie in einem Fahrzeug eingesetzt. Die Information wird in diesem Fall in dem Fahrzeug angezeigt. Auch die Betätigung der Eingabevorrichtung erfolgt in diesem Fall im Fahrzeug von einem Fahrzeuginsassen.

Im Folgenden werden Ausführungsbeispiele der Erfindung mit Bezug zu den Zeichnungen erläutert.

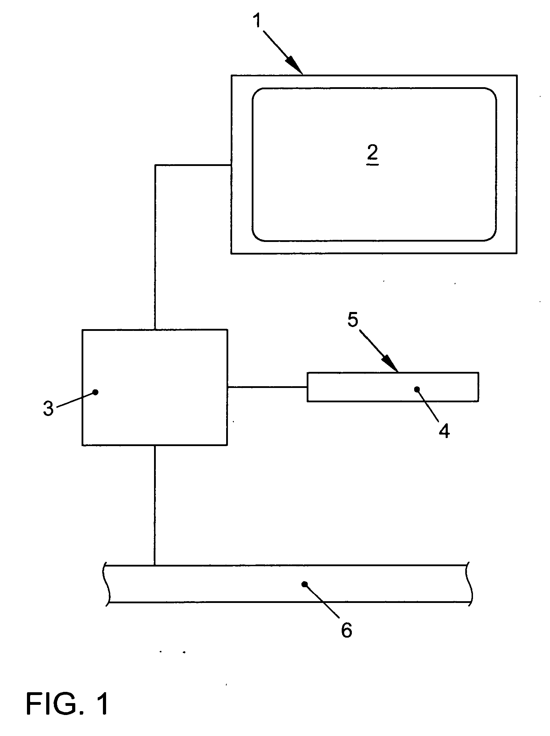

Fig. 1 zeigt schematisch den Aufbau eines Ausführungsbeispiels der erfindungsgemäßen Bedienvorrichtung und die Kopplung dieser Vorrichtung mit anderen Einrichtungen des Fahrzeugs,

Fig. 2 zeigt ein Beispiel für die Aufsicht auf die berührungsempfindliche Oberfläche der Eingabevorrichtung,

Fig. 3 zeigt ein Beispiel für die Anzeige der Anzeigevorrichtung gemäß einem Ausführungsbeispiel des erfindungsgemäßen Verfahrens,

Fig. 4A bis 4C zeigen die Anzeigen der Anzeigevorrichtung gemäß einem weiteren Ausführungsbeispiel des erfindungsgemäßen Verfahrens und

Fig. 5A bis 5C zeigen die Anzeigen der Anzeigevorrichtung gemäß einem weiteren Ausführungsbeispiel des erfindungsgemäßen Verfahrens.

Die Bedienvorrichtung umfasst eine Anzeigevorrichtung 1 zum Anzeigen von Information in einem Fahrzeug, insbesondere einem Kraftfahrzeug. Die Anzeigevorrichtung 1 umfasst eine Anzeigefläche 2, die so im Innenraum des Fahrzeugs angeordnet ist, dass sie von zumindest einem Fahrzeuginsassen, insbesondere dem Fahrer, gut sichtbar ist: Die Anzeigefläche 2 kann von einem Display, insbesondere einem Flüssigkristalldisplay, beliebiger Bauart bereitgestellt werden. Die Anzeigevorrichtung 1 ist mit einer Steuervorrichtung 3 gekoppelt.

Die Steuervorrichtung 3 erzeugt Grafikdaten, die mittels der Anzeigevorrichtung 1 angezeigt werden können. Die Steuervorrichtung 3 ist ferner mit einer Eingabevorrichtung 4 gekoppelt. Die Eingabevorrichtung 4 ist so ausgebildet, dass durch eine Betätigung die auf der Anzeigefläche 2 angezeigte Information vom Nutzer verändert werden kann. Dabei setzt die Steuervorrichtung 3 die mittels der Eingabevorrichtung 4 getätigten Eingaben des Nutzers um, indem beispielsweise die auf der Anzeigefläche 2 wiedergegebene Anzeige verändert wird. Schließlich ist die Steuervorrichtung mit einem Fahrzeugbus 6 gekoppelt, über welchen Daten mit vielfältigen Einrichtungen des Fahrzeugs ausgetauscht werden können.

Erfindungsgemäß ist die Eingabevorrichtung drucksensitiv, d.h. die Größe einer vom Nutzer auf die Eingabevorrichtung ausgeübten Kraft kann von der Eingabevorrichtung 4 detektiert werden. Die Eingabevorrichtung 4 kann insbesondere eine drucksensitive Oberfläche 5 aufweisen. Die Eingabevorrichtung 4 detektiert, bei welcher Position eine Kraft in welcher Größe auf die Oberfläche 5 ausgeübt wird. Sie stellt somit ein so genanntes Touchpad dar.

Die drucksensitive Oberfläche 5 der Eingabevorrichtung 4 kann des Weiteren auch auf der Anzeigefläche 2 der Anzeigevorrichtung 1 angeordnet sein, so dass als Eingabevorrichtung 4 in diesem Fall ein drucksensitiver Touchscreen bereitgestellt wird.

Gemäß einer speziellen Ausgestaltung der drucksensitiven Eingabevorrichtung 4 ist die Oberfläche 5 in Wirkverbindung mit einer ersten Schicht, die eine Vielzahl leitender Spuren aufweist, die auf der Oberfläche der Schicht in einer ersten Richtung ausgerichtet sind. Ferner ist eine zweite Schicht vorgesehen, welche auch eine Vielzahl leitender Spuren aufweist, die in einer zweiten Richtung auf der Oberfläche der zweiten Schicht ausgerichtet sind. Zwischen den beiden Schichten ist eine deformierbare dielektrische Membran angeordnet. Durch die Anordnung der beiden Schichten und der Membran ist es möglich, dass mittels der leitenden Spuren der beiden Schichten ein Kapazitätsabbild gewonnen wird, wenn eine Kraft auf die erste Schicht ausgeübt wird. Dieses Kapazitätsabbild zeigt die Größe der Kraft an, die bei den jeweiligen Positionen auf die Oberfläche 5 ausgeübt wird. Weitere Details und Ausgestaltungen können der EP 1 840 715 A2 entnommen werden, die durch Bezugnahme in die vorliegende Anmeldung aufgenommen wird.

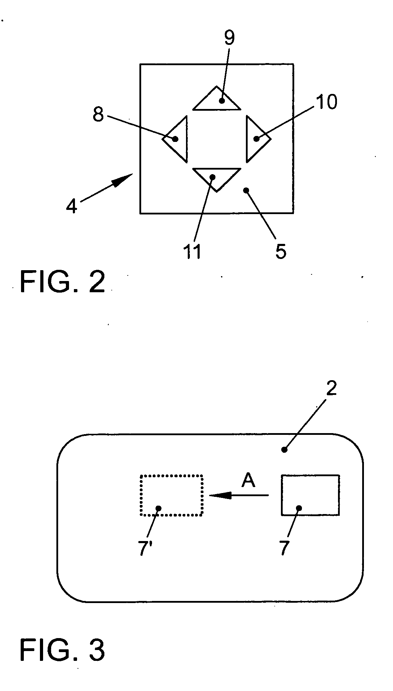

Fig. 2 zeigt ein Beispiel einer Aufsicht auf die drucksensitive Oberfläche 5 der Eingabevorrichtung 4. Die Oberfläche 5 umfasst vier Bedienelemente 8 bis 11, welche Pfeile andeuten, die angeben, in welche Richtung ein auf der Anzeigefläche 2 dargestelltes Objekt 7 verschoben werden soll oder in welche Richtung der von der Anzeigefläche 2 angezeigte Ausschnitt in einer virtuellen Ebene 12 verschoben werden soll, wie es im Folgenden erläutert wird.

Bei dem in Fig. 3 gezeigten Beispiel wird von der Anzeigefläche 2 ein grafisches Objekt 7 dargestellt. Dieses Objekt 7 kann eine bestimmte Information anzeigen. Will der Nutzer das grafische Objekt 7 auf der Anzeigefläche 2 in Richtung des Pfeils A nach links zu der Position 7' verschieben, betätigt er das Bedienelement 8 der Eingabevorrichtung 4 für ein bestimmtes Zeitintervall. Während der Betätigung wird von der Eingabevorrichtung 4 die Kraft gemessen, mit der der Nutzer auf das Bedienelement 8 drückt. Sowohl die Betätigung des Bedienelements 8 als auch die Größe der Kraft, die auf das Bedienelement 8 der Eingabevorrichtung 4 ausgeübt wurde, wird von der Eingabevorrichtung 4 an die Steuervorrichtung 3 übertragen.

Die Steuervorrichtung 3 wertet die übertragenen Daten zum einen so aus, dass der eingegebene Bedienbefehl ermittelt wird. Dies führt im vorliegenden Beispiel dazu, dass die Steuervorrichtung 3 die Grafikkarten so verändert, dass das grafische Objekt 7 in Richtung des Pfeils A verschoben wird. Die Geschwindigkeit, mit welcher das Objekt 7 verschoben wird, wird von der Steuervorrichtung 3 in Abhängigkeit von der Kraft bestimmt, die vom Nutzer auf das Bedienelement 8 der Eingabevorrichtung 4 ausgeübt wurde. Je größer die ausgeübte Kraft war, desto höher ist die Geschwindigkeit, mit welcher das Objekt 7 bei der Darstellung auf der Anzeigefläche 2 verschoben wird. Im Übrigen kann es von der Größe der ausgeübten Kraft auch abhängen, wie weit das Objekt 7 verschoben wird.

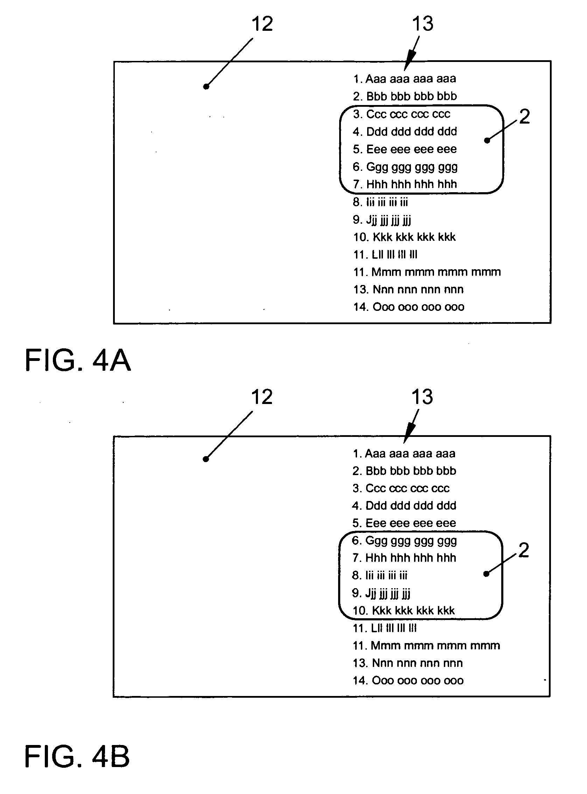

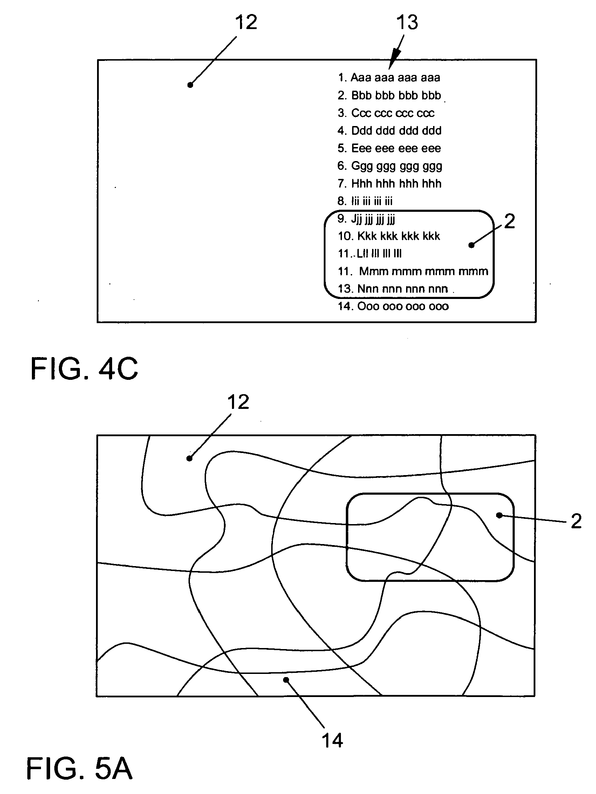

Bei dem in Fig. 4A bis 4C gezeigten Beispiel wird auf der Anzeigefläche 2 eine Teilmenge einer Liste 13 angezeigt. Die gesamte Liste 13 kann man veranschaulichen, indem sie auf einer virtuellen Ebene 12 angeordnet ist. Die Anzeigefläche 2 zeigt in diesem Fall einen Ausschnitt dieser virtuellen Anzeigeebene 12. Der Nutzer kann die angezeigten Listeneinträge der Liste 13 verändern, indem er die Anzeigefläche 2 auf der virtuellen Ebene 12 nach oben oder nach unten bewegt. Betätigt der Nutzer beispielsweise das Bedienelement 11 der Eingabevorrichtung 4 für ein bestimmtes Zeitintervall, verändert die Steuervorrichtung die angezeigten Listeneinträge so, dass Listeneinträge angezeigt werden, die in der Liste 13 weiter unten auftreten. Durch die Betätigung des Bedienelements 11 kann der Nutzer somit durch die Liste 13 scrollen. Die Geschwindigkeit, mit der die Information auf der Anzeigefläche 2 verändert werden, d.h. insbesondere wie schnell die Anzeige durch die Liste 13 scrollt, hängt dabei von der Kraft ab, mit welcher der Nutzer das Bedienelement 11 der Eingabevorrichtung 4 betätigt bzw. betätigt hat. In Fig. 4B ist der Fall gezeigt, bei dem der Nutzer eine geringere Kraft auf das Bedienelement 11 ausgeübt hat, in Fig. 4C ist der Fall gezeigt, bei dem der Nutzer eine größere Kraft auf das Bedienelement 11 ausgeübt hat. Wie aus den Fig. 4B und 4C ersichtlich, war die Geschwindigkeit, mit welcher der Anzeigeinhalt beim Scrollen durch die Liste 13 verändert wurde, im in Fig.4C gezeigten Fall größer, so dass in diesem Fall Listeneinträge wiedergegeben werden, die weiter unten in der Liste 13 stehen.

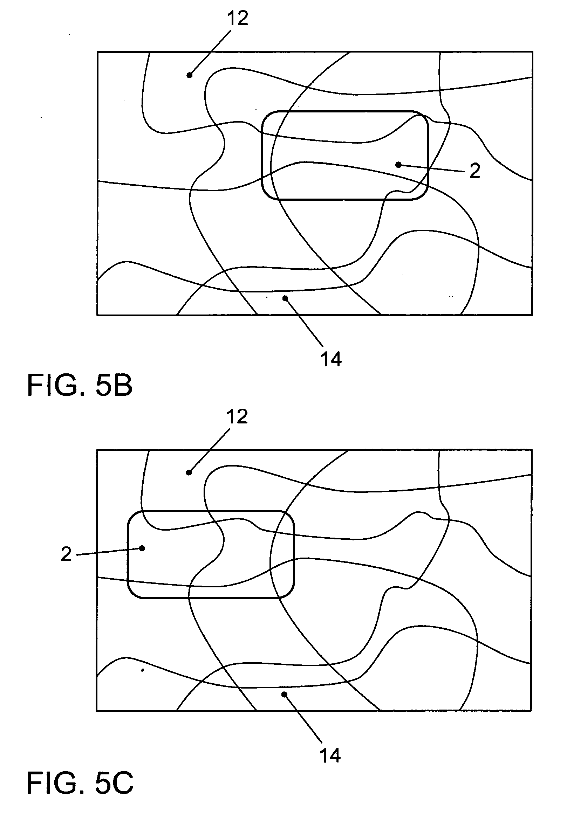

In den Fig. 5A bis 5C ist ein Beispiel gezeigt, bei welchem die Anzeigefläche 2 einen Ausschnitt einer digitalen geografischen Straßenkarte 14 anzeigt. In diesem Fall kann man die digitale geografische Straßenkarte als eine virtuelle Anzeigeebene 12 interpretieren, von der die Anzeigefläche 2 einen Ausschnitt wiedergibt. Ausgehend von dem in Fig. 5A gezeigten Ausschnitt, der von der Anzeigefläche 2 wiedergegeben wird, kann der Nutzer durch Betätigung des Bedienelements 8 der Eingabevorrichtung 4 den Ausschnitt nach links auf der virtuellen Anzeigeebene 12 verschieben. Die Geschwindigkeit, mit welcher der Ausschnitt der Anzeigefläche 2 über der virtuellen Anzeigeebene 12 nach links verschoben wird, hängt in diesem Fall erneut von der Größe der Kraft ab, mit welcher der Nutzer das Bedienelement 8 betätigt. Wird für ein bestimmtes Zeitintervall das Bedienelement mit einer geringen Kraft betätigt, wird der von der Anzeigefläche 2 wiedergegebene Ausschnitt bis zu der in Fig. 5B gezeigten Position verschoben, ist die ausgeübte Kraft größer, wird der Ausschnitt bis zu der in Fig. 5C wiedergegebenen Position verschoben.

Die Geschwindigkeit, mit der sich die in der Anzeigefläche 2 angezeigte Information verändert, kann in der Steuervorrichtung 3 wie folgt bestimmt werden:

In der Steuervorrichtung 3 wird die Kraft, die unter normalen Umständen auf die Eingabevorrichtung 4 ausgeübt wird, in Bereiche unterteilt. Die Bereichsgrenzen stellen somit Schwellenwerte dar. Jedem Bereich wird ein Geschwindigkeitswert zugeordnet, so dass mit steigender Kraft die Geschwindigkeit in diskreten Schritten beim Überschreiten der Bereichsgrenzen erhöht wird. Beispielsweise kann die ausübbare Kraft in vier Bereiche unterteilt werden.

Alternativ kann sich die Geschwindigkeit auch linear mit der ausgeübten Kraft ändern, so dass folgender Zusammenhang gilt:

$$v = F \cdot D \quad ,$$

wobei $v$ die Geschwindigkeit, $F$ die ausgeübte Kraft und $D$ ein Dämpfungsfaktor ist, der in der Steuervorrichtung 3 gespeichert ist.

## BEZUGSZEICHENLISTE

| | |
|---|---|
| 1 | Anzeigevorrichtung |
| 2 | Anzeigefläche |
| 3 | Steuervorrichtung |
| 4 | Eingabevorrichtung |
| 5 | drucksensitive Oberfläche |
| 6 | Fahrzeugbus |
| 7, 7' | grafisches Objekt |
| 8-11 | Bedienelemente |
| 12 | virtuelle Anzeigeebene |
| 13 | Liste |
| 14 | digitale Straßenkarte |

## Patentansprüche

1. Verfahren zum Anzeigen von Information, bei dem von einer Anzeigevorrichtung (1) Information angezeigt wird und die angezeigte Information dadurch verändert wird, dass ein Nutzer eine Eingabevorrichtung (4) betätigt, wobei die bei der Betätigung vom Nutzer auf die Eingabevorrichtung ausgeübte Kraft detektiert wird und wobei die Geschwindigkeit, mit der sich die angezeigte Information ändert, von der ausgeübten Kraft abhängt,
**dadurch gekennzeichnet,**
**dass** von der Anzeigevorrichtung (1) ein die Information enthaltendes grafisches Objekt (7) in einem Teilbereich einer Anzeigefläche (2) dargestellt wird und dass die Position des Objekts (7) innerhalb der Anzeigefläche (2) durch die Betätigung der Eingabevorrichtung (4) verschoben wird, wobei die Verschiebegeschwindigkeit von der vom Nutzer bei der Betätigung der Eingabevorrichtung ausgeübten Kraft abhängt.

2. Verfahren nach Anspruch 1,
**dadurch gekennzeichnet,**
**dass** die Geschwindigkeit umso höher ist, desto größer die vom Nutzer bei der Betätigung ausgeübte Kraft ist.

3. Verfahren nach einem der vorstehenden Ansprüche,
**dadurch gekennzeichnet,**
**dass** von der Anzeigevorrichtung (1) eine die Information enthaltende Liste (13) angezeigt wird, wobei die Liste (13) eine Vielzahl von Listeneinträgen umfasst und wobei nur eine Teilmenge dieser Vielzahl von Listeneinträgen angezeigt wird, und dass die angezeigten Listeneinträge der Liste (13) durch die Betätigung der Eingabevorrichtung (4) verändert werden, wobei die Geschwindigkeit der Veränderung von der vom Nutzer bei der Betätigung der Eingabevorrichtung (4) ausgeübten Kraft abhängt.

4. Verfahren nach Anspruch 3,
**dadurch gekennzeichnet,**
**dass** der Nutzer durch die Betätigung der Eingabevorrichtung (4) durch die Liste (13) scrollt, wobei die Scrollgeschwindigkeit von der vom Nutzer bei der Betätigung der Eingabevorrichtung (4) ausgeübten Kraft abhängt.

5. Verfahren nach einem der vorstehenden Ansprüche,
**dadurch gekennzeichnet,**
**dass** von der Anzeigevorrichtung (1) die Information eines Ausschnitts einer virtuellen Anzeigeebene (12) angezeigt wird und dass die Position des Ausschnitts innerhalb der virtuellen Anzeigeebene (12) durch die Betätigung der Eingabevorrichtung verschoben wird, wobei die Verschiebegeschwindigkeit von der vom Nutzer bei der Betätigung der Eingabevorrichtung (4) ausgeübten Kraft abhängt.

6. Verfahren nach einem der vorstehenden Ansprüche,
**dadurch gekennzeichnet,**
**dass** von der Anzeigevorrichtung (1) die Information in einem Darstellungsmaßstab dargestellt wird und dass der Darstellungsmaßstab durch die Betätigung der Eingabevorrichtung (4) verändert wird, wobei die Veränderungsgeschwindigkeit von der vom Nutzer bei der Betätigung der Eingabevorrichtung (4) ausgeübten Kraft abhängt.

7. Verfahren nach einem der vorstehenden Ansprüche,
   **dadurch gekennzeichnet,**
   **dass** die bei der Betätigung der Eingabevorrichtung (4) ausübbare Kraft in Bereiche unterteilt wird, und dass die Geschwindigkeit, mit der sich die angezeigte Information ändert, vom Bereich abhängt, in welchen die ausgeübte Kraft fällt.

8. Verfahren nach einem der Ansprüche 1 bis 6,
   **dadurch gekennzeichnet,**
   **dass** die Geschwindigkeit, mit der sich die angezeigte Information ändert, von der ausgeübten Kraft in folgender Weise abhängt:

$$v = F \cdot D \ ,$$

wobei *v* die Geschwindigkeit, *F* die ausgeübte Kraft und *D* ein Dämpfungsfaktor ist.

9. Bedienvorrichtung mit einer Anzeigevorrichtung (1) zum Anzeigen von Information, einer Eingabevorrichtung (4) und einer Steuervorrichtung (3), die mit der Anzeigevorrichtung (1) und der Eingabevorrichtung (4) so gekoppelt ist, dass durch eine Betätigung der Eingabevorrichtung (4) die angezeigte Information veränderbar ist, wobei die Eingabevorrichtung (4) drucksensitiv ist, so dass die bei der Betätigung der Eingabevorrichtung ausgeübte Kraft detektierbar ist, und die Steuervorrichtung (3) die Anzeigevorrichtung (1) so steuert, dass die Geschwindigkeit, mit der sich die angezeigte Information ändert, von der ausgeübten Kraft abhängt
   **dadurch gekennzeichnet,**
   **dass** von der Anzeigevorrichtung (1) ein die Information enthaltendes grafisches Objekt (7) in einem Teilbereich einer Anzeigefläche (2) darstellbar ist und dass die Position des Objekts (7) innerhalb der Anzeigefläche (2) durch die Betätigung der Eingabevorrichtung (4) verschiebbar ist, wobei die Verschiebegeschwindigkeit von der vom Nutzer bei der Betätigung der Eingabevorrichtung ausgeübten Kraft abhängt.

10. Bedienvorrichtung nach Anspruch 9,
    **dadurch gekennzeichnet,**
    **dass** die Eingabevorrichtung (4) die Kraft resistiv detektiert.

11. Bedienvorrichtung nach Anspruch 9,

**dadurch gekennzeichnet,**
**dass** die Eingabevorrichtung (4) die Kraft kapazitiv detektiert.

12. Bedienvorrichtung nach einem der Ansprüche 9 bis 11,
    **dadurch gekennzeichnet,**
    **dass** die Eingabevorrichtung (4) eine berührungsempfindliche Oberfläche (5) umfasst, und dass die auf diese Oberfläche (5) ausgeübte Kraft detektierbar ist.

13. Bedienvorrichtung nach Anspruch 12,
    **dadurch gekennzeichnet,**
    **dass** die Oberfläche (5) auf einer Anzeigefläche (2) der Anzeigevorrichtung (1) angeordnet ist.

## Claims

1. Method for displaying information in which a display apparatus (1) displays information and the displayed information is altered by virtue of a user operating an input apparatus (4), wherein the force exerted on the input apparatus by the user during operation is detected and wherein the speed at which the displayed information changes is dependent on the force exerted,
   **characterized**
   **in that** the display apparatus (1) presents a graphical object (7) containing the information in a subregion of a display panel (2) and in that the position of the object (7) within the display panel (2) is shifted by the operation of the input apparatus (4), wherein the shift speed is dependent on the force exerted by the user during operation of the input apparatus.

2. Method according to Claim 1,
   **characterized**
   **in that** the speed is higher the greater the force exerted by the user during operation.

3. Method according to either of the preceding claims,
   **characterized**
   **in that** the display apparatus (1) displays a list (13) containing the information, wherein the list (13) comprises a multiplicity of list entries and wherein only a subset of this multiplicity of list entries is displayed, and in that the displayed list entries in the list (13) are altered by the operation of the input apparatus (4), wherein the speed of the alteration is dependent on the force exerted by the user during operation of the input apparatus (4).

4. Method according to Claim 3,
   **characterized**
   **in that** the user scrolls through the list (13) by operating the input apparatus (4), wherein the scroll speed is dependent on the force exerted by the user during operation of the input apparatus (4).

5. Method according to one of the preceding claims, **characterized in that** the display apparatus (1) displays the information for a detail from a virtual display level (12) and in that the position of the detail within the virtual display level (12) is shifted by the operation of the input apparatus, wherein the shift speed is dependent on the force exerted by the user during operation of the input apparatus (4).

6. Method according to one of the preceding claims, **characterized in that** the display apparatus (1) presents the information on a presentation scale and in that the presentation scale is altered by the operation of the input apparatus (4), wherein the alteration speed is dependent on the force exerted by the user during operation of the input apparatus (4).

7. Method according to one of the preceding claims, **characterized in that** the force that can be exerted during operation of the input apparatus (4) is divided into ranges, and in that the speed at which the displayed information changes is dependent on the range into which the exerted force falls.

8. Method according to one of Claims 1 to 6, **characterized in that** the speed at which the displayed information changes is dependent on the exerted force in the following manner:

$$v = F \cdot D,$$

wherein $v$ is the speed, $F$ is the exerted force and $D$ is a damping factor.

9. Operator control apparatus having a display apparatus (1) for displaying information, an input apparatus (4) and a control apparatus (3), which is coupled to the display apparatus (1) and to the input apparatus (4) such that operation of the input apparatus (4) allows the displayed information to be altered, wherein the input apparatus (4) is pressure-sensitive, with the result that the force exerted during operation of the input apparatus can be detected, and the control apparatus (3) controls the display apparatus (1) such that the speed at which the displayed information changes is dependent on the exerted force, **characterized in that** the display apparatus (1) can present a graphical object (7) containing the information in a subregion of a display panel (2) and in that the position of the object (7) within the display panel (2) can be shifted by the operation of the input apparatus (4), wherein the shift speed is dependent on the force exerted by the user during operation of the input apparatus.

10. Operator control apparatus according to Claim 9, **characterized in that** the input apparatus (4) detects the force resistively.

11. Operator control apparatus according to Claim 9, **characterized in that** the input apparatus (4) detects the force capacitively.

12. Operator control apparatus according to one of Claims 9 to 11, **characterized in that** the input apparatus (4) comprises a touch-sensitive surface (5), and in that the force exerted on this surface (5) can be detected.

13. Operator control apparatus according to Claim 12, **characterized in that** the surface (5) is arranged on a display panel (2) of the display apparatus (1).

## Revendications

1. Procédé d'affichage d'informations, dans lequel les informations sont affichées par un dispositif d'affichage (1) et les informations affichées sont modifiées par actionnement d'un dispositif de saisie (4) par un utilisateur, la force exercée par l'utilisateur sur le dispositif de saisie lors de l'actionnement étant détectée et la vitesse à laquelle les informations affichées varient dépendant de la force exercée, **caractérisé en ce qu'**un objet (7) graphique contenant les informations est représenté dans une zone partielle d'une surface d'affichage (2) par le dispositif d'affichage (1) et que la position de l'objet (7) est déplacée à l'intérieur de la surface d'affichage (2) par l'actionnement du dispositif de saisie (4), la vitesse de déplacement dépendant de la force exercée par l'utilisateur lors de l'actionnement du dispositif de saisie.

2. Procédé selon la revendication 1, **caractérisé en ce que** plus la vitesse est élevée, plus la force exercée par l'utilisateur lors de l'actionnement est élevée.

3. Procédé selon l'une quelconque des revendications précédentes, **caractérisé en ce qu'**une liste (13) contenant les informations est affichée par le dispositif d'affichage (1), la liste (13) comprenant une pluralité d'entrées de liste et seule une quantité partielle de cette pluralité d'entrées de liste étant affichée et que les entrées de liste affichées de la liste (13) sont modifiées par actionnement du dispositif de saisie (4), la vitesse de modification dépendant de la force exercée par l'utilisateur lors de l'actionnement du dispositif de saisie (4).

**4.** Procédé selon la revendication 3, **caractérisé en ce que** l'utilisateur fait défiler la liste (13) par actionnement du dispositif de saisie (4), la vitesse de défilement dépendant de la force exercée par l'utilisateur lors de l'actionnement du dispositif de saisie (4).

**5.** Procédé selon l'une quelconque des revendications précédentes, **caractérisé en ce que** les informations d'un encart d'un plan d'affichage virtuel (12) sont affichées par le dispositif d'affichage (1) et que la position de l'encart à l'intérieur du plan d'affichage (12) virtuel est déplacée par l'actionnement du dispositif de saisie, la vitesse de déplacement dépendant de la force exercée par l'utilisateur lors de l'actionnement du dispositif de saisie (4).

**6.** Procédé selon l'une quelconque des revendications précédentes, **caractérisé en ce que** les informations sont représentées par le dispositif d'affichage (1) selon une échelle de représentation et que l'échelle de représentation est modifiée par actionnement du dispositif de saisie (4), la vitesse de modification dépendant de la force exercée par l'utilisateur lors de l'actionnement du dispositif de saisie (4).

**7.** Procédé selon l'une quelconque des revendications précédentes, **caractérisé en ce que** la force pouvant être exercée lors de l'actionnement du dispositif de saisie (4) est subdivisée en zones et que la vitesse à laquelle les informations affichées varient dépend de la zone dans laquelle la force est exercée.

**8.** Procédé selon l'une quelconque des revendications 1 à 6, **caractérisé en ce que** la vitesse à laquelle les informations affichées varient dépend de la façon suivante de la force exercée :

$$V = F \cdot D$$

v étant la vitesse, F la force exercée et D un facteur d'amortissement.

**9.** Dispositif d'actionnement doté d'un dispositif d'affichage (1) servant à afficher des informations, d'un dispositif de saisie (4) et d'un dispositif de commande (3) couplé de telle sorte au dispositif d'affichage (1) et au dispositif de saisie (4) que les informations affichées peuvent être modifiées par un actionnement du dispositif de saisie (4), le dispositif de saisie (4) étant tactile, de façon à permettre de détecter la force exercée lors de l'actionnement du dispositif de saisie et le dispositif de commande (3) commandant le dispositif d'affichage (1) de telle sorte que la vitesse à laquelle les informations affichées varient dépend de la force exercée, **caractérisé en ce qu'**un objet (7) graphique contenant les informations peut être représenté dans une zone partielle d'une surface d'affichage (2) par le dispositif d'affichage (1) et que la position de l'objet (7) peut être déplacée à l'intérieur de la surface d'affichage (2) par l'actionnement du dispositif de saisie (4), la vitesse de déplacement dépendant de la force exercée par l'utilisateur lors de l'actionnement du dispositif de saisie.

**10.** Dispositif d'actionnement selon la revendication 9, **caractérisé en ce que** le dispositif de saisie (4) détecte la force de façon résistive.

**11.** Dispositif d'actionnement selon la revendication 9, **caractérisé en ce que** le dispositif de saisie (4) détecte la force de façon capacitive.

**12.** Dispositif d'actionnement selon l'une quelconque des revendications 9 à 11, **caractérisé en ce que** le dispositif de saisie (4) comprend une surface tactile (5) et que la force exercée sur cette surface (5) peut être détectée.

**13.** Dispositif d'actionnement selon la revendication 12, **caractérisé en ce que** la surface superficielle (5) est disposée sur une surface d'affichage (2) du dispositif d'affichage (1).

FIG. 1

FIG. 2

FIG. 3

12     13

1. Aaa aaa aaa aaa
2. Bbb bbb bbb bbb
3. Ccc ccc ccc ccc    2
4. Ddd ddd ddd ddd
5. Eee eee eee eee
6. Ggg ggg ggg ggg
7. Hhh hhh hhh hhh
8. Iii iii iii iii
9. Jjj jjj jjj jjj
10. Kkk kkk kkk kkk
11. Lll lll lll lll
11. Mmm mmm mmm mmm
13. Nnn nnn nnn nnn
14. Ooo ooo ooo ooo

# FIG. 4A

12     13

1. Aaa aaa aaa aaa
2. Bbb bbb bbb bbb
3. Ccc ccc ccc ccc
4. Ddd ddd ddd ddd
5. Eee eee eee eee
6. Ggg ggg ggg ggg    2
7. Hhh hhh hhh hhh
8. Iii iii iii iii
9. Jjj jjj jjj jjj
10. Kkk kkk kkk kkk
11. Lll lll lll lll
11. Mmm mmm mmm mmm
13. Nnn nnn nnn nnn
14. Ooo ooo ooo ooo

# FIG. 4B

FIG. 4C

FIG. 5A

FIG. 5B

FIG. 5C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0152044 A2
- DE 102006032118 A1
- DE 19941956 A1
- DE 19941960 A1
- EP 0366132 B1
- DE 19944324
- DE 10324579 A1
- DE 102005020155 A1
- EP 1840715 A2